# EUROPEAN PATENT APPLICATION

(11) **EP 4 813 620 A1**
(43) Date of publication of application: **30.09.2026**
(21) Application number: 25760726.7
(22) Date of filing: 06.02.2025
(51) Int. Cl.: B30B 3/00, B30B 15/34, D01D 5/16

(54) **HEATING ROLLER AND ROLLING DEVICE**

(30) Priority: 29.02.2024 CN 202420391308 U
(71) Applicant: Shanghai Lead Huineng Technology Co., Ltd., Shanghai 201100 (CN)
(72) Inventor: LIU, Kunjie, Shanghai 201100 (CN); LI, Jiadong, Shanghai 201100 (CN); HUANG, Wei, Shanghai 201100 (CN)
(74) Representative: Rau, Schneck & Hübner Patentanwälte Rechtsanwälte PartGmbB
(86) International application number: PCT/CN2025/075909
(87) International publication number: WO 2025/180182

(57) **Abstract**

A heating roller includes: a roller body (10); a plurality of heating members (20) extending along a length direction of the roller body (10) and uniformly distributed in the roller body (10) along a circumferential direction of the roller body (10); and a heat pipe assembly formed as an annular frame structure and provided in the roller body (10), the plurality of heating members (20) being located on an inner circumference of the heat pipe assembly. By providing the heat pipe assembly in the roller body (10), it is possible to effectively reduce the temperature difference of the circumferential surface of the roller body (10), thereby improving the temperature uniformity of the surface of the roller body (10). Also provided is a roller pressing device.

## Description

The present disclosure claims priority to a Chinese patent application No. 202420391308.2 filed with the CNIPA on February 29, 2024 and entitled "HEATING ROLLER AND ROLLER PRESSING DEVICE", which is hereby incorporated by reference in its entirety.

### TECHNICAL FIELD

The present disclosure relates to the technical field of battery preparation devices, and particularly to a heating roller and a roller pressing device.

### BACKGROUND

Electric heating rollers are widely used in the production industry of electrode materials for lithium batteries. Certain specific production processes have high requirements for the consistency (temperature uniformity) of the surface temperature of the electric heating roller. However, the structure of existing electric heating rollers usually heats the roller body by mounting an electric heating rod inside a metal roller body. This method has low heat transfer efficiency, high power consumption, and poor temperature uniformity of the roller body surface, with a temperature fluctuation range reaching ±5°C, which has a significant impact on the performance of the electrode materials.

### SUMMARY

The present disclosure aims to alleviate or solve at least one of the above-mentioned problems at least to a certain extent.

In one aspect of the present disclosure, the present disclosure proposes a heating roller, comprising: a roller body; a plurality of heating members extending along a length direction of the roller body and uniformly distributed in the roller body along a circumferential direction of the roller body; and a heat pipe assembly formed as an annular frame structure and provided in the roller body, the plurality of heating members being located on an inner circumference of the heat pipe assembly.

Optionally, the heat pipe assembly is brazed together with the roller body.

Optionally, in a radial direction of the roller body, a minimum distance between each heating member and a circumferential surface of the roller body is smaller than a distance between each heating member and an axis of the roller body.

Optionally, the heat pipe assembly comprises: a plurality of first heat pipe sections extending along the length direction of the roller body and uniformly distributed in the roller body along the circumferential direction of the roller body, and in the circumferential direction of the roller body, a distribution density of the first heat pipe sections being smaller than that of the heating members; and at least one second heat pipe section formed as an annular body extending along the circumferential direction of the roller body, the second heat pipe section interconnecting the plurality of first heat pipe sections.

Optionally, the heat pipe assembly comprises two second heat pipe sections, wherein one of the second heat pipe sections interconnects first ends of the plurality of first heat pipe sections, and the other of the second heat pipe sections interconnects second ends of the plurality of first heat pipe sections.

Optionally, an end portion of the roller body is provided with a mounting groove, which is adapted to the second heat pipe section, and the second heat pipe section is provided in the mounting groove.

Optionally, the roller body is provided with a plurality of first mounting holes penetrating therethrough along the length direction thereof, a number of the first mounting holes corresponds to that of the heating members, and each heating member completely fills a respective first mounting hole.

Optionally, the roller body is provided with a plurality of second mounting holes penetrating therethrough along the length direction thereof, a number of the second mounting holes corresponds to that of the first heat pipe sections, and each first heat pipe section completely fills a respective second mounting hole.

Optionally, the heating roller further comprises: two end caps provided at two ends of the roller body and configured to fix the heating members.

Optionally, each end cap is provided with an insertion portion on a side close to the roller body, the insertion portion is inserted into the mounting groove, and the heating roller further comprises: a sealing member sleeved over the insertion portion and configured to fill a gap between the insertion portion and a wall surface of the mounting groove.

Optionally, the heating roller further comprises: a plurality of temperature detection members uniformly distributed in the roller body along the circumferential direction of the roller body and configured to detect a temperature of the roller body.

Optionally, each heating member is formed as an electric heating rod extending along the length direction of the roller body.

In another aspect of the present disclosure, the present disclosure proposes a roller pressing device, comprising the above-mentioned heating roller.

Thus, for the heating roller and the roller pressing device proposed by the present disclosure, by providing the heat pipe assembly with extremely high heat transfer efficiency inside the roller body, the heat pipe assembly can rapidly transfer the heat generated by the plurality of heating members along the outer periphery thereof in the circumferential direction of the roller body, thereby effectively reducing the temperature difference of the circumferential surface of the roller body and improving the temperature uniformity of the surface of the roller body; moreover, the temperature of the plurality of heating members can be controlled independently, which can further ensure the temperature uniformity of the surface of the roller body.

### BRIEF DESCRIPTION OF THE DRAWINGS

The above and/or additional aspects and advantages of the present disclosure will become apparent and easily understood from the description of the embodiments in conjunction with the accompanying drawings below, wherein:
FIG. 1 shows a perspective view of a heating roller according to an embodiment of the present disclosure.
FIG. 2 shows a front view of a heating roller according to an embodiment of the present disclosure.
FIG. 3 shows a cross-sectional view taken along line A-A in FIG. 2.
FIG. 4 shows a right side view of a heating roller according to an embodiment of the present disclosure.
FIG. 5 shows a cross-sectional view taken along line B-B in FIG. 3.
FIG. 6 shows an enlarged structural schematic diagram of circle C in FIG. 5.

Description of reference signs:
Heating roller 100;
Roller body 10; Mounting groove 11;
Heating member 20;
Heat pipe assembly 30; First heat pipe section 31; Second heat pipe section 32;
End cap 40; Insertion portion 41;
Sealing member 50; Temperature detection member 60.

### DETAILED DESCRIPTION

To facilitate a better understanding of the above objects, features and advantages of the present disclosure, specific embodiments of the present disclosure will be described in detail below with reference to the accompanying drawings. In the following description, numerous specific details are set forth in order to provide a thorough understanding of the present disclosure. However, the present disclosure can be implemented in many other ways different from those described here, and those skilled in the art can make similar improvements without violating the essence of the present disclosure. Therefore, the present disclosure is not limited by the specific embodiments disclosed below.

In the description of the present disclosure, it should be understood that, orientations or positional relationships indicated by terms "center", "longitudinal", "lateral", "length", "width", "thickness", "upper", "lower", "front", "back", "left", "right", "vertical", "horizontal", "top", "bottom", "inner", "outer", "clockwise", "counterclockwise", "axial", "radial", "circumferential" are based on orientations or positional relationships shown in the accompanying drawings, and is only for convenience of describing the present disclosure and simplifying the description, rather than indicating or implying that a device or element referred to must be provided with a particular orientation, be constructed and operate in a particular orientation, and therefore should not be understood as a limitation to the present disclosure.

In addition, terms "first" and "second" are only used for descriptive purposes and should not be understood as indicating or implying relative importance or implying the number of indicated technical features. Therefore, a feature designated as "first" or "second" may expressly or implicitly includes at least one of those features. In a description of the present disclosure, "a plurality" means at least two, such as two, three, etc., unless expressly and specifically defined otherwise.

In the present disclosure, unless expressly specified and limited otherwise, terms "mounted", "coupled", "connected", "fixed" and other terms should be interpreted in a broad sense, for example, it can be a fixed connection, a detachable connection, or an integral structure; it can be a mechanical connection or an electrical connection; it can be directly connected, or indirectly connected through an intermediate medium, and it can be an internal communication between two elements or an interaction relationship between the two elements, unless otherwise explicitly defined. For those of ordinary skill in the art, specific meanings of the above terms in the present disclosure can be understood according to specific situations.

In the present disclosure, unless expressly stated and defined otherwise, a first feature "on" or "under" a second feature may be that the first feature is in direct contact with the second feature, or the first feature and the second feature are indirectly contacted through an intermediary. In addition, the first feature being "above", "over" and "on" the second feature may indicate that the first feature is directly above or obliquely above the second feature, or simply means that the first feature is on a higher horizontal level than the second feature. The first feature being "below", "under" and "beneath" the second feature may indicate that the first feature is directly below or obliquely below the second feature, or simply means that the first feature is on a lower horizontal level than the second feature.

It should be noted that when an element is referred to as being "fixed to" or "arranged on" another element, it can be directly on another element, or there might be an intervening element between them. When an element is referred to as being "connected" to another element, it can be directly connected to another element or intervening elements may also be present. Terms "vertical", "horizontal", "upper", "lower", "left", "right" and similar expressions are used here only for illustration purposes rather than indicating the sole implementation.

Below, the heating roller 100 according to an embodiment of the present disclosure is specifically described in conjunction with the accompanying drawings.

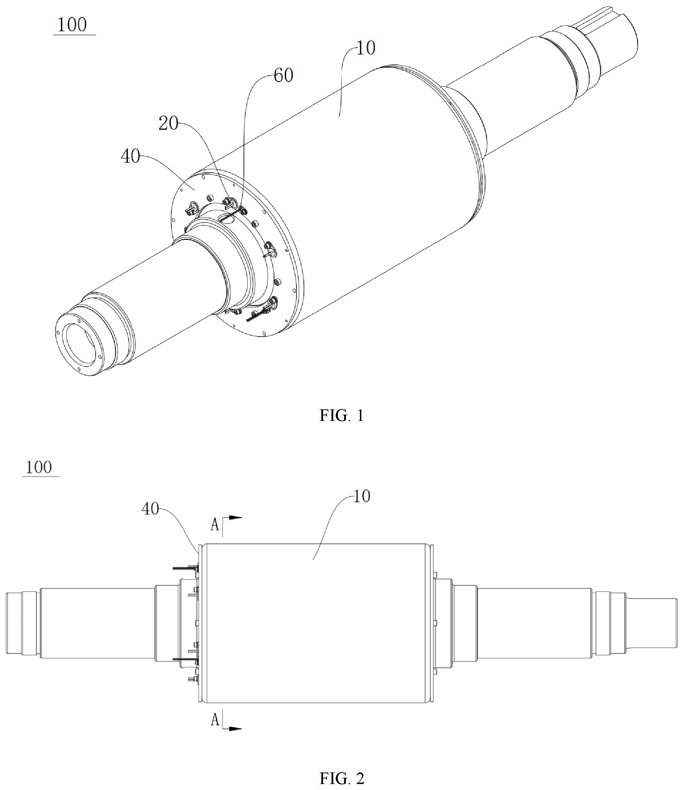

As shown in FIGS. 1 to 6, the heating roller 100 according to an embodiment of the present disclosure includes a roller body 10, a plurality of heating members 20, and a heat pipe assembly 30.

Specifically, the heating members 20 extend along the length direction of the roller body 10, and are uniformly distributed along the circumferential direction of the roller body 10 inside the roller body 10; the heat pipe assembly 30 is formed as an annular frame structure, and is provided inside the roller body 10; and the plurality of heating members 20 are located on the inner side of the circumference of the heat pipe assembly 30.

In other words, as shown in FIGS. 1 to 6, the heating roller 100 according to an embodiment of the present disclosure mainly includes the roller body 10, the plurality of heating members 20 and the heat pipe assembly 30, wherein the roller body 10 is made of a forging, and its hardness is improved by quenching during processing, to a hardness of HRC62-64, with a quenching depth greater than 5 mm, and the length direction of the roller body 10 is the same as the length direction of the heating members 20. The number of the heating members 20 may be six, and the six heating members 20 are respectively provided inside the roller body 10 to heat the roller body 10 at different positions in the circumferential direction of the roller body 10, and the plurality of heating members 20 are uniformly distributed in the circumferential direction of the roller body 10, so as to effectively ensure the temperature uniformity of the circumferential surface (rolling surface) of the roller body 10.

The heat pipe assembly 30 may be formed as an annular frame structure, the length direction of the heat pipe assembly 30 is the same as the length direction of the roller body 10, and the radial dimension of the heat pipe assembly 30 is smaller than the radial dimension of the roller body 10, so that the heat pipe assembly 30 may be provided inside the roller body 10, and the plurality of heating members 20 are all located on the inner side of the circumference of the heat pipe assembly 30, so that the heat pipe assembly 30 can rapidly transfer the heat generated by the plurality of heating members 20 along the outer periphery thereof in the circumferential direction of the roller body 10, thereby effectively reducing the temperature difference of the circumferential surface of the roller body 10. Experiments show that the temperature difference of the rolling surface of the heating roller 100 according to the embodiment of the present disclosure is±0.5°C or less.

It should be noted that the "heat pipe" in the heat pipe assembly 30 is a heat transfer element that realizes heat transfer by means of phase change of an internal working fluid therein, has extremely high heat transfer efficiency, and is known as a thermal superconductor.

Thus, for the heating roller 100 provided according to the present embodiment, by providing the heat pipe assembly 30 with extremely high heat transfer efficiency inside the roller body 10, the heat pipe assembly 30 can rapidly transfer the heat generated by the plurality of heating members 20 along the outer periphery thereof in the circumferential direction of the roller body 10, thereby effectively reducing the temperature difference of the circumferential surface of the roller body 10 and improving the temperature uniformity of the surface of the roller body 10; moreover, the temperature of the plurality of heating members 20 can be controlled independently, which can further ensure the temperature uniformity of the surface of the roller body 10.

Further, each heating member 20 is formed as an electric heating rod of an elongated cylindrical structure extending along the length direction of the roller body 10, and the heating power of the electric heating rod may be 1500 W.

In some examples of the present disclosure, the roller body 10 is provided with a mounting passage penetrating therethrough along its axial direction.

According to an embodiment of the present disclosure, the heat pipe assembly 30 is brazed together with the roller body 10.

Specifically, the heat pipe assembly 30 and the roller body 10 are joined together by a brazing filler metal, so as to fix the heat pipe assembly 30 on the roller body 10, and the gap between the heat pipe assembly 30 and the roller body 10 can be filled by the brazing filler metal, which can effectively improve the heat transfer efficiency of the connection interface between the heat pipe assembly 30 and the roller body 10, thereby further improving the temperature uniformity of the surface of the roller body 10.

In some implementations of the present disclosure, in the radial direction of the roller body 10, a minimum distance between each heating member 20 and a circumferential surface of the roller body 10 is smaller than a distance between each heating member 20 and an axis of the roller body 10.

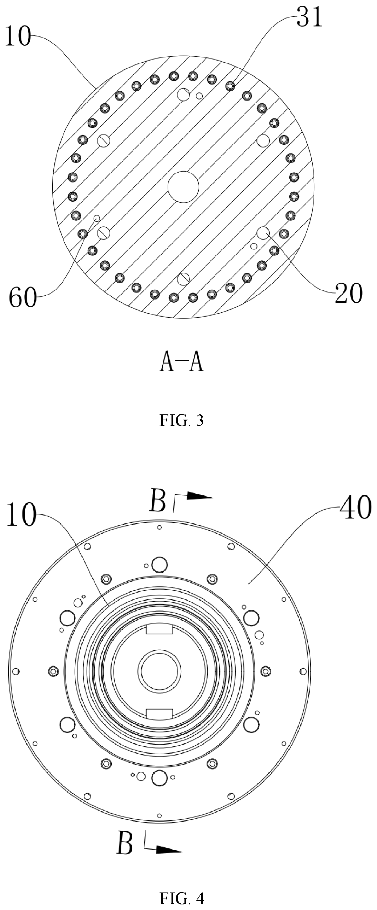

That is, as shown in FIG. 3, in the radial direction of the roller body 10, the minimum distance between each heating member 20 and the circumferential surface of the roller body 10 is d1, the distance between each heating member 20 and the axis of the roller body 10 is d2, and d1 < d2, so as to ensure that the heat generated by the heating members 20 can be transferred to the circumferential surface of the roller body 10 more quickly.

According to an embodiment of the present disclosure, the heat pipe assembly 30 includes a plurality of first heat pipe sections 31 and at least one second heat pipe section 32. The first heat pipe sections 31 extend along the length direction of the roller body 10 and are uniformly distributed in the roller body 10 along the circumferential direction of the roller body 10, and in the circumferential direction of the roller body 10, the distribution density of the first heat pipe sections 31 is smaller than that of the heating members 20. The second heat pipe section 32 is formed as an annular body extending along the circumferential direction of the roller body 10, and interconnects the plurality of first heat pipe sections 31.

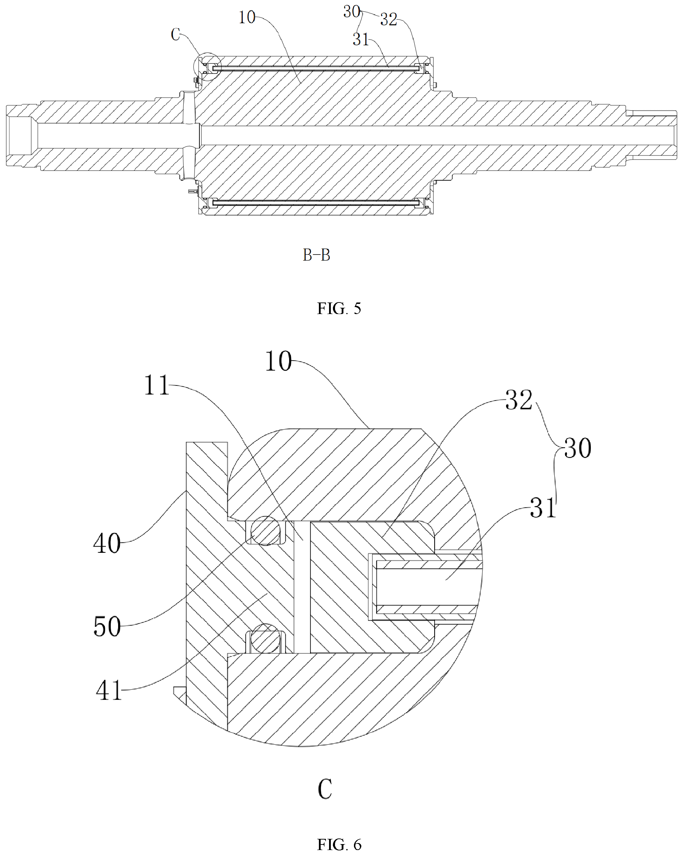

In other words, as shown in FIGS. 3 and 6, the heat pipe assembly 30 according to an embodiment of the present disclosure mainly includes a plurality of first heat pipe sections 31 and at least one second heat pipe section 32, wherein each of the first heat pipe sections 31 is formed as a columnar structure extending along the length direction (axial direction) of the roller body 10, so that the heat pipe assembly 30 can rapidly transfer the heat emitted by the heating members 20 in the length direction of the roller body 10; one end of each of the plurality of first heat pipe sections 31 is connected and in communication with the second heat pipe section 32, so that the heat emitted by the heating members 20 can be rapidly transferred in the circumferential direction of the roller body 10 through the second heat pipe section 32, thereby effectively reducing the temperature difference of the circumferential surface of the roller body 10; and the plurality of first heat pipe sections 31 are uniformly distributed inside the roller body 10 along the circumferential direction of the roller body 10, so as to further reduce the temperature difference of the circumferential surface of the roller body 10.

In some implementations of the present disclosure, the heat pipe assembly 30 includes two second heat pipe sections 32, wherein one of the second heat pipe sections 32 interconnects first ends of the plurality of first heat pipe sections 31, and the other of the second heat pipe sections 32 interconnects second ends of the plurality of first heat pipe sections 31.

That is, as shown in FIGS. 5 and 6, the heat pipe assembly 30 may include two second heat pipe sections 32, the plurality of first heat pipe sections 31 are all located between the two second heat pipe sections 32, and the first ends of the plurality of first heat pipe sections 31 are connected and in communication with one of the second heat pipe sections 32, and the second ends of the plurality of first heat pipe sections 31 are connected and in communication with the other of the second heat pipe sections 32, so that the two second heat pipe sections 32 can transfer heat at both ends of the plurality of first heat pipe sections 31, which can further reduce the temperature difference of the circumferential surface of the roller body 10 and improve the temperature uniformity of the surface of the roller body 10.

According to an embodiment of the present disclosure, an end portion of the roller body 10 is provided with a mounting groove 11, which is adapted to the second heat pipe section 32, and the second heat pipe section 32 is provided in the mounting groove 11.

Specifically, as shown in FIG. 6, both ends of the roller body 10 are respectively provided with a mounting groove 11, and the mounting grooves 11 extend along the circumferential direction of the roller body 10 to form annular grooves adapted to the second heat pipe sections 32, so that both of the two second heat pipe sections 32 can be disposed in the mounting grooves 11, thereby improving the heat utilization rate and facilitating the assembly of the heat pipe assembly 30.

In some implementations of the present disclosure, the roller body 10 is provided with a plurality of first mounting holes penetrating therethrough along its length direction, the number of the first mounting holes corresponds to that of the heating members 20, and each heating member 20 completely fills a respective first mounting hole; and/or, the roller body 10 is provided with a plurality of second mounting holes penetrating therethrough along its length direction, the number of the second mounting holes corresponds to that of the first heat pipe sections 31, and each first heat pipe section 31 completely fills a respective second mounting hole.

In detail, an end portion of the roller body 10 is provided with first mounting holes, wherein the number of the first mounting holes is the same as that of the heating members 20, and each of the first mounting holes is formed as a through-hole structure penetrating therethrough along the length direction of the roller body 10. The length and radial dimension of the heating members 20 are configured to be substantially the same as those of the first mounting holes, so that each heating member 20 can completely fill a respective first mounting hole. Thus, the structure is simple and convenient for production and assembly; moreover, the roller body 10 can be heated at every position in its length direction by the heating members 20, which can effectively ensure the temperature uniformity of the roller body 10 in its length direction.

Further, an end portion of the roller body 10 is provided with second mounting holes, the number of the second mounting holes is the same as that of the first heat pipe sections 31, the second mounting holes are formed as through-hole structures penetrating therethrough along the length direction of the roller body 10, the length and radial dimension of the first heat pipe sections 31 are configured to be substantially the same as those of the first mounting holes, so that each first heat pipe section 31 can completely fill a respective first mounting hole, the structure is simple and convenient for production and assembly; moreover, heat transfer can occur at every position of the roller body 10 in the length direction of the roller body 10 by the first heat pipe sections 31, which can effectively ensure the temperature uniformity of the roller body 10 in its length direction.

According to an embodiment of the present disclosure, the heating roller 100 further includes two end caps 40 which are provided at two ends of the roller body 10 and configured to fix the heating member 20.

That is, as shown in FIGS. 1 and 2, two ends of the roller body 10 in its length direction (axial direction) are respectively provided with end caps 40, and the end caps 40 can be fixedly connected with the roller body 10 through screws, so that the heating members 20 can be fixed by the end caps 40 at the two ends of the roller body 10, and the structure is simple and convenient for production and assembly.

One of the end caps 40 is provided with a first through hole penetrating therethrough along its thickness direction, and the first through hole corresponds to the position of the heating member 20, so that the wiring section of the heating member 20 can be exposed from the first through hole for connection with a control circuit.

In some implementations of the present disclosure, a side of the end cap 40 close to the roller body 10 is provided with an insertion portion 41 inserted into the mounting groove 11, and the heating roller 100 further includes a sealing member 50 sleeved over the insertion portion 41 and configured to fill a gap between the insertion portion 41 and a wall surface of the mounting groove 11.

Specifically, as shown in FIG. 6, a side of the end cap 40 close to the roller body 10 is provided with the insertion portion 41 extending along its thickness direction, the insertion portion 41 is formed as a boss structure adapted to the position and shape of the mounting groove 11, and when the end cap 40 is connected with the roller body 10, the insertion portion 41 is inserted into the mounting groove 11, so as to seal the open end of the mounting groove 11. When the brazing filler metal connecting the heat pipe assembly 30 and the roller body 10 melts due to excessively high temperature, the brazing filler metal can be sealed in the mounting groove 11 by the insertion portion 41, which can effectively avoid loss of the brazing filler metal.

Further, a side wall of the insertion portion 41 is provided with an annular groove extending along its circumferential direction, and the insertion portion 41 is sleeved with a sealing member 50 at the position of the annular groove, the sealing member 50 may be a high-temperature resistant rubber ring, which fills the gap between the insertion portion 41 and the wall surface of the mounting groove 11, so as to achieve a sealing effect and further avoid loss of the brazing filler metal.

According to an embodiment of the present disclosure, the heating roller 100 further includes: a plurality of temperature detection members 60 uniformly distributed in the roller body 10 along the circumferential direction of the roller body 10 and configured to detect a temperature of the roller body 10.

That is, as shown in FIGS. 1 and 3, an end portion of the roller body 10 is provided with a plurality of third mounting holes extending along its length direction, the number of the third mounting holes may be three, the three third mounting holes may be uniformly distributed along the circumferential direction of the roller body 10, each third mounting hole is internally provided with a temperature detection member 60, the temperature detection member 60 may be a thermocouple, one end cap 40 is provided with a second through hole penetrating therethrough along its thickness direction, and the position and number of the second through holes correspond to those of the temperature detection members 60, so that a wiring end of each temperature detection member 60 can be exposed from the end cap 40 for connection with a control circuit.

In the present embodiment, the temperature of the roller body 10 is detected at different positions in the circumferential direction of the roller body 10 by the plurality of temperature detection members 60 provided, and in use, a control system can adjust the temperature of the heating member 20 at a corresponding position according to the temperature fed back by the temperature detection member 60, so as to ensure the temperature uniformity of the surface of the roller body 10.

An embodiment of the present disclosure further provides a roller pressing device, such as, but not limited to, a pole piece roller press, a pole piece coating device, etc., and the roller pressing device includes the heating roller 100 described in any one of the above embodiments, and the heating member 20 and the temperature detection member 60 of the heating roller 100 are both electrically connected to a control system of the roller pressing device. Since the heating roller 100 according to the embodiment of the present disclosure has the above technical effects, the roller pressing device according to the embodiment of the present disclosure also has corresponding technical effects, which will not be repeated in the present embodiment.

Although some specific embodiments of the present disclosure have been described in detail by way of example, those skilled in the art should understand that the above examples are illustrative only and are not intended to limit the scope of the present disclosure. Those skilled in the art should understand that the above embodiments can be modified without departing from the scope and spirit of the present disclosure. The scope of the present disclosure is defined by the appended claims.

## Claims

1. A heating roller, **characterized by** comprising:
a roller body (10);
a plurality of heating members (20) extending along a length direction of the roller body (10) and uniformly distributed in the roller body (10) along a circumferential direction of the roller body (10); and
a heat pipe assembly formed as an annular frame structure and provided in the roller body (10), the plurality of heating members (20) being located on an inner circumference of the heat pipe assembly.

2. The heating roller according to claim 1, **characterized in that** the heat pipe assembly is brazed together with the roller body (10).

3. The heating roller according to claim 1 or 2, **characterized in that**, in a radial direction of the roller body (10), a minimum distance between each heating member (20) and a circumferential surface of the roller body (10) is smaller than a distance between each heating member (20) and an axis of the roller body (10).

4. The heating roller according to any one of claims 1 to 3, **characterized in that** the heat pipe assembly (30) comprises:
a plurality of first heat pipe sections (31) extending along the length direction of the roller body (10) and uniformly distributed in the roller body (10) along the circumferential direction of the roller body (10), and in the circumferential direction of the roller body (10), a distribution density of the first heat pipe sections (31) being smaller than that of the heating members (20); and
at least one second heat pipe section (32) formed as an annular body extending along the circumferential direction of the roller body (10), the second heat pipe section (32) interconnecting the plurality of first heat pipe sections (31).

5. The heating roller according to claim 4, **characterized in that** the heat pipe assembly (30) comprises two second heat pipe sections (32), wherein one of the second heat pipe sections (32) interconnects first ends of the plurality of first heat pipe sections (31), and the other of the second heat pipe sections (32) interconnects second ends of the plurality of first heat pipe sections (31).

6. The heating roller according to claim 4 or 5, **characterized in that** an end portion of the roller body (10) is provided with a mounting groove (11), which is adapted to the second heat pipe section (32), and the second heat pipe section (32) is provided in the mounting groove (11).

7. The heating roller according to any one of claims 4 to 6, **characterized in that** the roller body (10) is provided with a plurality of first mounting holes penetrating therethrough along the length direction thereof, a number of the first mounting holes corresponds to that of the heating members (20), and each heating member (20) completely fills a respective first mounting hole.

8. The heating roller according to any one of claims 4 to 7, **characterized in that** the roller body (10) is provided with a plurality of second mounting holes penetrating therethrough along the length direction thereof, a number of the second mounting holes corresponds to that of the first heat pipe sections (31), and each first heat pipe section (31) completely fills a respective second mounting hole.

9. The heating roller according to any one of claims 1 to 8, **characterized by** further comprising:
two end caps (40) provided at two ends of the roller body (10) and configured to fix the heating members (20).

10. The heating roller according to claim 9, **characterized in that** each end cap (40) is provided with an insertion portion (41) on a side close to the roller body (10), the insertion portion (41) is inserted into the mounting groove (11), and the heating roller further comprises:
a sealing member (50) sleeved over the insertion portion (41) and configured to fill a gap between the insertion portion (41) and a wall surface of the mounting groove (11).

11. The heating roller according to any one of claims 1 to 10, **characterized by** further comprising:
a plurality of temperature detection members (60) uniformly distributed in the roller body (10) along the circumferential direction of the roller body (10) and configured to detect a temperature of the roller body (10).

12. The heating roller according to any one of claims 1 to 11, **characterized in that** each heating member (20) is formed as an electric heating rod extending along the length direction of the roller body (10).

13. A roller pressing device, **characterized by** comprising the heating roller according to any one of claims 1 to 12.
